# EUROPÄISCHE PATENTSCHRIFT

(11) **EP 3 578 089 B1**
(45) Veröffentlichungstag und Bekanntmachung des Hinweises auf die Patenterteilung: **16.03.2022**
(21) Anmeldenummer: 18176292.3
(22) Anmeldetag: 06.06.2018
(51) Int. Cl.: A47J 43/046, A47J 43/07, B01F 15/00

(54) **REINIGUNGSEINRICHTUNG FÜR EIN RÜHRGEFÄSS EINER ELEKTROMOTORISCH BETRIEBENEN KÜCHENMASCHINE**
CLEANING DEVICE FOR A MIXING VESSEL OF A FOOD PROCESSOR OPERATED USING AN ELECTRIC MOTOR
DISPOSITIF DE NETTOYAGE POUR UN BAC À AGITATION D'UN ROBOT DE CUISINE ENTRAÎNÉ PAR UN MOTEUR ÉLECTRIQUE

(43) Veröffentlichungstag der Anmeldung: 11.12.2019
(73) Patentinhaber: Vorwerk & Co. Interholding GmbH, 42275 Wuppertal (DE)
(72) Erfinder: Charopoulos, Philipp, 40223 Düsseldorf (DE); Frielinghaus, Robert, 44799 Bochum (DE)
(74) Vertreter: Müller, Enno

(56) Entgegenhaltungen:
- WO-A1-2016/120067
- DE-A1- 3 921 115
- FR-A1- 2 931 036
- GB-A- 2 139 106
- GB-A- 2 562 602
- US-A- 3 380 716

## Beschreibung

### Gebiet der Technik

Die Erfindung betrifft eine Reinigungseinrichtung für ein Rührgefäß einer elektromotorisch betriebenen Küchenmaschine, wobei die Reinigungseinrichtung mittels eines Befestigungsmittels drehfest mit einem in dem Rührgefäß der Küchenmaschine positionierten Rotationselement verbindbar ist und ausgebildet ist, bei Rotation des Rotationselement um eine Rotationsachse über zumindest einen Teilbereich einer Innenwandung des Rührgefäßes zu streichen und dort befindliche Ablagerungen mechanisch zu lösen, wobei die Reinigungseinrichtung zur Reinigungseinwirkung sowohl in axialer Richtung, als auch in radialer Richtung ausgebildet ist, wobei die Reinigungseinrichtung in radialer Richtung betrachtet eine C-förmige Gestalt aufweist, welche ausgehend von der Rotationsachse konvex nach außen geformt ist und zumindest zwei sich gegenüberstehende Schenkel und einen die beiden Schenkel miteinander verbindenden Mittelteil aufweist.

Des Weiteren betrifft die Erfindung eine Reinigungseinrichtung für ein Rührgefäß einer elektromotorisch betriebenen Küchenmaschine, wobei die Reinigungseinrichtung mittels eines Befestigungsmittels drehfest mit einem in dem Rührgefäß der Küchenmaschine positionierten Rotationselement verbindbar ist und ausgebildet ist, bei Rotation des Rotationselements um eine Rotationsachse an zumindest einem Teilbereich einer Innenwandung des Rührgefäßes befindliche Ablagerungen zu lösen, wobei die Reinigungseinrichtung zur Reinigungseinwirkung sowohl in axialer Richtung als auch in radialer Richtung ausgebildet ist.

Daneben betrifft die Erfindung ein Rührgefäß für eine elektromotorisch betriebene Küchenmaschine, wobei das Rührgefäß ein Rotationselement aufweist, das mit einer Antriebswelle eines Drehantriebs der Küchenmaschine drehfest verbindbar ist, wobei das Rührgefäß eine Reinigungseinrichtung zur Reinigung einer Innenwandung des Rührgefäßes aufweist.

Daneben betrifft die Erfindung des Weiteren eine elektromotorisch betriebene Küchenmaschine mit einem Drehantrieb und einem Rührgefäß, wobei das Rührgefäß ein Rotationselement aufweist, welches drehfest mit einer Antriebswelle des Drehantriebs verbindbar ist.

### Stand der Technik

Im Stand der Technik existieren unterschiedliche Reinigungseinrichtungen zur Reinigung eines Rührgefäßes. Die Reinigungseinrichtungen dienen allesamt dazu, nach einer Zubereitung von Speisen innerhalb des Rührgefäßes an der Innenwandung anhaftende Ablagerungen zu entfernen. Beispielsweise sind manuelle Reinigungseinrichtungen, wie Bürsten, Schwämme, Stahlwolle und ähnliches bekannt, mit deren Hilfe die Innenwandung des Rührgefäßes durch Krafteinwirkung eines Nutzers gereinigt werden kann.

Darüber hinaus ist es auch bekannt, ein Rührgefäß einer elektromotorisch betriebenen Küchenmaschine dadurch zu reinigen, dass innerhalb des Rührgefäßes befindliche Flüssigkeit mittels eines Rührwerkes in Bewegung versetzt wird, wobei die Flüssigkeit Ablagerungen von der Innenwandung des Rührgefäßes löst.

Die Veröffentlichung WO 2016/120067 A1, auch veröffentlicht als US 2017/0368519 A1, offenbart darüber hinaus eine in das Rührgefäß einzusetzende Reinigungseinrichtung, welche so mit einem Rotationselement, nämlich dort einem Rührwerk, verbindbar ist, dass ein Reinigungselement bei einer Rotation des Rotationselements mitbewegt wird und über die Innenwandung und/oder über Teilbereiche des Rührwerkes streicht, um dort durch mechanische Zusammenwirkung Ablagerungen zu entfernen.

Weitere Reinigungseinrichtungen zeigen die Veröffentlichungen DE 39 21115 A1, FR 29 31 036 A1 und GB 2 139 106 A

Obwohl sich die vorgenannten Reinigungseinrichtungen im Stand der Technik bewährt haben, sind diese unter Umständen nicht ausreichend, um besondere Bereiche des Rührgefäßes, beispielsweise einen Gefäßboden oder eine Innenwandung eines Deckelelementes optimal zu reinigen.

### Zusammenfassung der Erfindung

Es ist daher Aufgabe der vorliegenden Erfindung, eine Reinigungseinrichtung sowie ein Rührgefäß mit einer solchen Reinigungseinrichtung und eine elektromotorisch betriebene Küchenmaschine mit einem solchen Rührgefäß zu schaffen, welche schnell und gründlich auch schwer zu erreichende, verschmutzte Bereiche des Rührgefäßes optimal reinigen.

Zur Lösung der vorgenannten Aufgabe schlägt die Erfindung vor, dass die Reinigungseinrichtung eingerichtet ist, den Gefäßboden, die Umfangswandung und das Deckelelement zu kontaktieren, so dass bei mit dem Deckelelement verschlossenem Rührgefäß gleichzeitig eine Reinigung von Gefäßboden, Umfangswandung und Deckelelement stattfinden kann.

Durch die C-förmige Gestalt der Reinigungseinrichtung weist diese bezogen auf eine übliche Orientierung der Reinigungseinrichtung Teilbereiche auf, die einen Gefäßboden, eine Umfangswandung und eine Innenseite eines Deckelelementes kontaktieren können. Die Reinigung ist somit nicht nur auf die Reinigung der Umfangsfläche des Rührgefäßes beschränkt, sondern behandelt auch schwer zugängliche Stellen, nämlich insbesondere den Gefäßboden und die Innenseite des Deckelelementes. Des Weiteren können durch die Ausbildung der Reinigungseinrichtung alle Reinigungsschritte zeitgleich ausgeführt werden, sodass bei mit dem Deckelelement verschlossenem Rührgefäß gleichzeitig eine Reinigung von Gefäßboden, Umfangsfläche und Deckelelement stattfinden kann. Die vorgeschlagene C-Form der Reinigungseinrichtung eignet sich insbesondere, um sowohl einen Kontakt mit der Bodenfläche und der Umfangswandung, als auch dem Deckelelement einzugehen und gleichzeitig aber so ausgebildet zu sein, dass eine Strömung von Flüssigkeit innerhalb des Rührgefäßes nicht beeinträchtigt wird, insbesondere unterstützend genutzt werden kann. Die C-Form ermöglicht eine Ausbildung der Reinigungseinrichtung mit bezogen auf eine radiale Erstreckung geringer Breite, sodass die Flüssigkeit an der Reinigungseinrichtung vorbeiströmen kann. Der Mitteilteil sowie auch die Schenkel der C-Form können an die Kontur des Gefäßbodens, der Umfangsfläche und auch der Deckelelement-Innenseite angepasst sein, nämlich vorzugsweise konvex nach außen geformt, wobei unterschiedliche Krümmungen und/oder auch stetige und nicht stetige Abschnitte ausgebildet sein können. Im Sinne einer C-förmigen Gestalt werden hier auch Formen verstanden, die G-förmig sind.

Die Reinigungseinrichtung weist zumindest ein Befestigungsmittel auf, um drehfest mit dem Rotationselement des Rührgefäßes verbunden werden zu können. Das Befestigungselement kann insbesondere ein Teil einer Steckverbindung, Schraubverbindung, Bajonettverbindung, Rastverbindung und/oder Magnetverbindung sein. Die Reinigungseinrichtung kann entweder unmittelbar mit einer Rotationswelle verbunden sein oder indirekt über ein Zubereitungswerkzeug, beispielsweise einen Messersatz und/oder einen Milchschaumaufsatz oder ähnliches. Sofern die Reinigungseinrichtung unmittelbar mit der Rotationswelle verbunden wird, kann der Nutzer ein sonst mit der Rotationswelle verbundenes Zubereitungswerkzeug gegen die Reinigungseinrichtung tauschen. Alternativ kann die Reinigungseinrichtung jedoch auch an einem bereits vorhandenen Zubereitungswerkzeug, beispielsweise einem Messersatz, befestigt werden, sodass die Reinigungseinrichtung bei Rotation des Zubereitungswerkzeugs mitrotiert. Ebenso verhält es sich im Falle eines Milchschaumaufsatzes, welcher mit dem Rotationselement verbunden ist. Vorteilhaft weist die Reinigungseinrichtung ein zentrales Trägerelement, beispielsweise eine Platte oder Ähnliches, auf, an welches sich die C-Form anschließt. Von dem zentralen Trägerelement kann auch eine Mehrzahl von C-förmigen Reinigungselementen ausgehen. Das zentrale Trägerelement kann direkt an einer Rotationswelle befestigt sein oder indirekt beispielsweise über ein Rührwerk, insbesondere einen Messersatz und/oder einen Milchschaumaufsatz. Das Befestigungsmittel der Reinigungseinrichtung korrespondiert vorzugsweise mit Befestigungsmitteln des Rotationselementes bzw. des Rührwerks. Dabei kann die Verbindung eine Formschlussverbindung, eine Kraftschlussverbindung, eine Verbindung durch Magnetkraft oder Ähnliches sein. Im Falle einer Steckverbindung kann die Reinigungseinrichtung einen Teilbereich aufweisen, in welchen beispielsweise ein Teilbereich des Rotationselementes hineinsteckbar ist. Im Falle einer Schraubverbindung können ein Teilbereich der Reinigungseinrichtung und ein Teilbereich des Rotationselementes korrespondierende Gewinde aufweisen, welche miteinander verschraubbar sind. Im Falle einer Bajonettverbindung kann ein Teilbereich der Reinigungseinrichtung durch eine Steck-Drehbewegung an einem Teilbereich des Rotationselementes fixiert werden. Im Falle einer Rastverbindung kann beispielsweise ein üblicher Hinterschnitt zur Anwendung kommen, wobei ein Teilbereich der Reinigungseinrichtung hinter einen korrespondierenden Teilbereich des Rotationselementes schnappt. Selbstverständlich ist es bei diesen Ausführungsformen angebracht, die Verbindung reversibel auszubilden, so dass der Nutzer der Reinigungseinrichtung diese komfortabel wieder von dem Rotationselement bzw. dem Rührwerk lösen kann. Dies kann beispielsweise durch eine an der Reinigungseinrichtung oder dem Rotationselement bzw. Rührwerk angeordnete Taste, Griff oder Ähnliches sichergestellt sein. Im Falle einer Magnetverbindung kann die Reinigungseinrichtung einen Permanentmagneten aufweisen, welcher mit einem magnetischen oder magnetisierbaren Teilbereich des Rotationselementes bzw. Rührwerks wechselwirkt. Insbesondere eignet sich hierfür ein magnetisches Material, wie beispielsweise magnetischer, korrosionsbeständiger Stahl, welcher gleichzeitig auch für die Zubereitung von Lebensmitteln geeignet ist.

Des Weiteren wird vorgeschlagen, dass die Reinigungseinrichtung ein Borstenelement und/oder ein Abstreifelement aufweist. Die Reinigungseinrichtung weist zumindest abschnittsweise zur mechanischen Einwirkung auf die Innenwandung des Rührgefäßes, einschließlich des Deckelelementes, geeignete Elemente auf. Diese können beispielsweise Borsten, Textilfasern, Metallfasern und/oder Ähnliches beinhalten. Wesentlich ist dabei, dass die Reinigungselemente einen Reinigungseffekt auf der zu reinigenden Fläche erzielen. Als Borsten kommen dabei insbesondere Metallborsten oder Naturborsten in Frage. Grundsätzlich eignen sich alle Materialien, die üblicherweise auch bei der Reinigung von Kochgeschirr, insbesondere Metalltöpfen verwendet werden. Dazu zählen unter anderem auch Textilfasern, Schwämme, Stahlwolle und so weiter. Die individuelle Ausbildung der Reinigungselemente kann dabei auf die Kochgewohnheiten eines Nutzers abgestimmt sein.

Des Weiteren wird vorgeschlagen, dass die Reinigungseinrichtung zumindest zwei nicht parallel zueinander ausgerichtete, im Wesentlichen rechtwinklig zueinander orientierte, Einwirkungsflächen aufweist. Gemäß dieser Ausgestaltung steht zumindest ein Teilbereich jedes Schenkels der C-Form quer zu einem Teilbereich des Mittelteils, so dass diese nicht parallel zueinander ausgerichtet sind, sondern vielmehr in einem Winkel ungleich 0 Grad, vorzugsweise einem Winkel zwischen 60 Grad und 120 Grad, vorzugsweise zwischen 75 Grad und 105 Grad, besonders bevorzugt rechtwinklig zueinander. Die als Einwirkungsflächen ausgebildeten Teilbereiche können gemäß dieser Ausgestaltung einerseits zum Reinigen einer Umfangsfläche eines Rührgefäßes und andererseits zum Reinigen eines Gefäßbodens des Rührgefäßes beziehungsweise einer Innenwandung eines Deckelelementes des Rührgefäßes dienen. Sofern ein Teilbereich eines Gefäßbodens und ein Teilbereich einer Umfangswandung des Rührgefäßes nicht rechtwinklig zueinander stehen, beziehungsweise ein Teilbereich der Umfangswandung und ein Teilbereich des Deckelelementes, können entsprechend andere Winkel zwischen den Einwirkungsflächen der Reinigungseinrichtung vorteilhaft sein. Beispielsweise sind Rührgefäße bekannt, welche sich von dem Gefäßboden ausgehend in Richtung des Deckelelementes aufweiten, so dass der Winkel zwischen dem Gefäßboden und der Umfangswandung größer als 90 Grad ist. Des Weiteren kann es auch vorgesehen sein, dass eine Innenwandung des Deckelelementes nicht eben ausgebildet ist, sondern derart gekrümmt ist, dass die Randbereiche des Deckelelementes bei an dem Rührgefäß befestigter Position des Deckelelementes niedriger stehen als eine Mitte des Deckelelementes, so dass kondensierter Dampf vorteilhaft ausgehend von der Mitte des Deckelelementes zu den Seitenrändern strömt und von dort aus wieder zurück in das Rührgefäß fließen kann.

Des Weiteren wird vorgeschlagen, dass die Reinigungseinrichtung zumindest in Teilbereichen aus einem elastischen Material gebildet ist, so dass die C-Form durch Krafteinwirkung von radial außen in Richtung der Rotationsachse stauchbar ist und/oder bei Fliehkrafteinwirkung nach radial außen streckbar ist. Die Reinigungseinrichtung ist durch das elastische Material flexibel genug, um an einer Innenseite des Rührgefäßes vorhandenen Erhebungen ausweichen zu können, beispielsweise kann es sich bei diesen Erhebungen um rippenförmige Elemente der Innenwandung des Rührgefäßes handeln, die als Wellenbrecher innerhalb des Rührgefäßes funktionieren und die Ausbildung einer donutförmigen Flüssigkeitstrombe verhindern sollen. Diese Wellenbrecher verlaufen an der Umfangswandung des Rührgefäßes üblicherweise in eine Richtung, die von dem Gefäßboden zu dem Deckelelement zeigt. Über die Flexibilität des Materials der Reinigungseinrichtung ist es des Weiteren möglich, den Anpressdruck an den Innenwandungen des Rührgefäßes einschließlich des Deckelelementes, fliehkraftabhängig einzustellen. Bei Rotation des Rotationselementes und damit auch der Rotation der Reinigungseinrichtung drückt die Reinigungseinrichtung mit ihren Kontaktflächen gegen insbesondere radial von der Rotationsachse beabstandete Flächen des Rührgefäßes, wobei sich der Anpressdruck in Abhängigkeit von der Rotationsgeschwindigkeit des Rotationselementes sowie auch der Elastizität des Materials der Reinigungseinrichtung einstellt. Um eine optimale Reinigung der Innenwandung des Rührgefäßes, inklusive des Deckelelementes, zu erreichen, wird das Rührgefäß zudem vorzugsweise mit Flüssigkeit befüllt. Als Material für die Ausbildung der Reinigungseinrichtung eignen sich beispielsweise Metalle oder Kunststoffe, insbesondere Elastomere. Wichtig ist, dass diese Materialien lebensmittelecht sind und in Kontakt mit Lebensmitteln gelangen dürfen. Gegebenenfalls empfiehlt sich eine Reinigungseinrichtung mit einem Materialkern aus elastischem Material und einer lebensmittelechten Ummantelung. Wesentlich ist, dass die Elastizität des Materials insgesamt geeignet ist, die Rotationseinrichtung in Richtung einer Rückstellkraft des Materials zurück zu verlagern, insbesondere gegen die Innenwandungen.

Des Weiteren wird eine Reinigungseinrichtung für ein Rührgefäß einer elektromotorisch betriebenen Küchenmaschine vorgeschlagen, welche Reinigungseinrichtung mittels eines Befestigungsmittels drehfest mit einem in dem Rührgefäß der Küchenmaschine positionierten Rotationselement verbindbar ist und ausgebildet ist, bei Rotation des Rotationselements um eine Rotationsachse an zumindest einem Teilbereich einer Innenwandung des Rührgefäßes befindliche Ablagerungen zu lösen, wobei die Reinigungseinrichtung zur Reinigungseinwirkung sowohl in axialer Richtung, als auch in radialer Richtung ausgebildet ist, wobei die Reinigungseinrichtung die Rotationsachse in Umfangsrichtung zumindest bezogen auf einen Winkelabschnitt umgibt und von radial außen betrachtet eine wellenförmige Kontur mit zumindest einem Wellenanstieg und zumindest einem Wellenabfall aufweist, wobei die Reinigungseinrichtung in axiale Richtung betrachtet eine geschlossene ringförmige Kontur aufweist. Die Reinigungseinrichtung kann insbesondere eine Reinigungseinrichtung mit den Merkmalen einer der zuvor beschriebenen Ausführungsformen sein.

Die nunmehr gemäß dieser abgewandelten Ausführung vorgeschlagene Reinigungseinrichtung dient zur Reinigung einer Innenwandung des Rührgefäßes inklusive eines Deckelelementes durch in Bewegung versetzte und insbesondere auch hochgespritzte Flüssigkeit, die gegen die zu reinigenden Flächen gelangt. Auch diese Reinigungseinrichtung dient wiederum zur drehfesten Verbindung mit einem Rotationselement des Rührgefäßes beziehungsweise der Küchenmaschine, wobei nach der Art einer Geschirrspülmaschine eine abrasive Wirkung über bewegte Flüssigkeit hervorgerufen wird. Insbesondere ist es so möglich, mit einem nur geringen Flüssigkeitseinsatz eine Abreinigung des gesamten Innenwandungsbereiches des Rührgefäßes inklusive des Deckelelementes zu erreichen. Die erfindungsgemäße wellenförmige Kontur mit zumindest einem Wellenanstieg und zumindest einem Wellenabfall bewirkt bei Rotation der Reinigungseinrichtung eine Verlagerung der Flüssigkeit gegen beispielsweise den Gefäßboden oder gegen das Deckelelement. Ein Abschnitt der wellenförmigen Kontur, welcher beispielsweise bezogen auf die Rotationsrichtung der Reinigungseinrichtung einen vorauseilenden Wellenanstieg und einen nacheilenden Wellenabfall aufweist, bewirkt durch den Wellenabfall eine Druckbeaufschlagung gegen den Gefäßboden, so dass dort Ablagerungen beziehungsweise Verschmutzungen optimal gelöst werden können. Mit einer Umkehr der Rotationsrichtung kann die Flüssigkeit anschließend über die nach oben gebogenen Flächen der Kontur, nämlich über einen oder mehrere Wellenanstiege, gegen das Deckelelement oder gegen obere Bereiche der Umfangsfläche des Rührgefäßes geschleudert werden.

Es wird diesbezüglich insbesondere vorgeschlagen, dass die wellenförmige Kontur mehrere Wellenanstiege und mehrere Wellenabfälle aufweist. Vorzugsweise liegen sich die Wellenanstiege bezogen auf die Rotationsachse paarweise gegenüber und/oder liegen sich die Wellenabfälle bezogen auf die Rotationsachse paarweise gegenüber. Das paarweise Gegen über liegen der Wellenanstiege beziehungsweise Wellenabfälle führt insbesondere zu einer rotationssymmetrischen Ausgestaltung der Reinigungseinrichtung, so dass sich die an der Kontur angreifenden Fliehkräfte ausgleichen und keine Unwucht der Rotationseinrichtung entsteht.

Bei dieser Ausführungsform wird erfindungsgemäß ferner vorgeschlagen, dass die Reinigungseinrichtung in axiale Richtung betrachtet eine geschlossene, ringförmige Kontur aufweist. Diese Ausgestaltung dient einerseits einer optimierten Stabilität der Reinigungseinrichtung bei Rotation der Reinigungseinrichtung gegen den Druck der in dem Rührgefäß befindlichen Flüssigkeit. Darüber hinaus ermöglicht die geschlossene ringförmige Kontur jedoch auch die Anordnung einer Vielzahl von im Umfangsrichtung hintereinander liegenden, insbesondere sich abwechselnden, Wellenanstiegen und Wellenabfällen.

Des Weiteren wird vorgeschlagen, dass ein Wellenanstieg und ein Wellenabfall in einer zu der Rotationsachse parallelen Richtung gespiegelt hintereinander liegen. Gemäß dieser Ausgestaltung bewerten die Wellenanstiege und Wellenabfälle gleichzeitig einen Flüssigkeitsdruck auf das Deckelelement und den Gefäßboden, bzw. auf die oberen Flächenbereiche der Umfangswandung des Rührgefäßes und auf die unteren Flächenbereiche der Umfangswandung. Bei der Rotation der Reinigungseinrichtung wird die Flüssigkeit zeitgleich an den Anstiegen und Abfällen abgelenkt. Bezogen auf die entgegengesetzte Rotationsrichtung, der keine Wellenberge und Wellentäler entgegenstehen, kann die Reinigungseinrichtung eine im Wesentlichen parallel zu der Rotationsachse orientierte Schubfläche eines Schubelementes aufweisen, welche einer richtungsneutralen Verteilung der Flüssigkeit dient. Auch bei der Variante mit bezogen auf die Rotationsachse hintereinanderliegenden Wellenanstiegen und Wellenabfällen, die paarweise angeordnet sind, ist es sinnvoll, die Reinigungseinrichtung symmetrisch zu der Rotationsachse auszubilden, so dass sich Paare von gleichgestalteten Wellenanstiegen beziehungsweise Wellenabfällen punktsymmetrisch und in der gleichen axialen Ebene gegenüberliegen.

Auch bei der Ausbildung der Reinigungseinrichtung mit einer wellenförmigen Kontur, die zumindest einen Wellenanstieg und zumindest einen Wellenabfall aufweist, kann vorteilhaft ein Borstenelement und/oder ein Abstreifelement vorgesehen sein. Beispielsweise können unterhalb der wellenförmigen Kontur, insbesondere unterhalb eines Wellenberges, Borstenelemente angeordnet sein, die mechanisch auf den Rührgefäßboden einwirken.

Beide Ausführungsformen von erfindungsgemäßen Reinigungseinrichtungen, das heißt sowohl die Ausführungsform einer C-förmigen Reinigungseinrichtung, als auch die Ausführungsform einer Reinigungseinrichtung mit wellenförmiger Kontur, können vorzugsweise zur Reinigung unter Mitwirkung von Flüssigkeit angewendet werden. Die Flüssigkeit kann optional innerhalb des Rührgefäßes erhitzt werden, um eine chemische Reinigungsleistung zu verbessern. Es bietet sich eine Temperatur von bis zu 60 Grad Celsius an, um in einem optimalen Wirkungsbereich gängiger Haushaltsreinigungsmittel zu bleiben und die Verletzungsgefahr für den Nutzer der Küchenmaschine möglichst auszuschließen. Bei der Verwendung eines chemischen Spülmittelzusatzes empfiehlt es sich, die Schaumbildung zu unterdrücken, da insbesondere bei der Ausführungsform der Reinigungseinrichtung mit wellenförmiger Kontur durch die dämpfende Wirkung des Schaums ein Spritzen innerhalb des Rührgefäßes behindert werden könnte. Ferner sollte der Spülmittelzusatz seine Wirkung möglichst kurzfristig entfalten, um eine optimale Reinigung des Rührgefäßes inklusive des Deckelelementes möglichst schnell, vorzugsweise innerhalb einer Minute zu erreichen.

Neben der zuvor beschriebenen Reinigungseinrichtung wird mit der Erfindung des Weiteren ein Rührgefäß für eine elektromotorisch betriebene Küchenmaschine vorgeschlagen, wobei das Rührgefäß ein Rotationselement aufweist, das mit einer Antriebswelle eines Drehantriebs der Küchenmaschine drehfest verbindbar ist, wobei das Rührgefäß eine Reinigungseinrichtung zur Reinigung einer Innenwandung des Rührgefäßes aufweist, und wobei die Reinigungseinrichtung nach einer der zuvor beschriebenen Ausführungsformen ausgebildet ist.

Das Rührgefäß kann somit eine Reinigungseinrichtung nach eine ersten Ausführungsform aufweisen, welche zur Reinigungseinwirkung sowohl in axialer Richtung als auch in radialer Richtung ausgebildet ist, wobei die Reinigungseinrichtung in radialer Richtung betrachtet eine C-förmige Gestalt aufweist, welche ausgehend von der Rotationsachse konvex nach außen geformt ist und zumindest zwei sich gegenüber stehende Schenkel und einen die beiden Schenkel miteinander verbindenden Mittelteil aufweist.

Nach einer zweiten Ausführungsform kann das Rührgefäß eine Reinigungseinrichtung aufweisen, welche die Rotationsachse in Umfangsrichtung zumindest bezogen auf einen Winkelabschnitt umgibt und von radial außen betrachtet eine wellenförmige Kontur mit zumindest einem Wellenanstieg und zumindest einem Wellenabfall aufweist.

Die zuvor in Bezug auf die Reinigungseinrichtungen beschriebenen Vorteile und Merkmale ergeben sich entsprechend auch für das erfindungsgemäße Rührgefäß. Auf eine Wiederholung der Merkmale wird an dieser Stelle verzichtet.

In Bezug auf das Rührgefäß wird des Weiteren vorgeschlagen, dass dieses ein Deckelelement mit einer zentralen Öffnung aufweist, wobei die Reinigungseinrichtung bezogen auf eine Betrachtung in axialer Richtung ein die zentrale Öffnung bedeckendes Spritzschutzelement aufweist, welches ausgebildet ist, ein Herausspritzen von Flüssigkeit aus der zentralen Öffnung zu verhindern. Das Spritzschutzelement verhindert ein Herausspritzen von Flüssigkeit durch die Öffnung, welche während einer Zubereitung von Zubereitungsgut üblicherweise durch ein separates Verschlusselement, wie einen Messbecher, verschlossen wird. Sofern vergessen wird, das separate Verschlusselement auch während der Reinigung des Rührgefäßes in die zentrale Öffnung einzusetzen, verhindert das an der Reinigungseinrichtung ausgebildete Spritzschutzelement ein Herausspritzen von Flüssigkeit. Das Spritzschutzelement kann beispielsweise ein koaxial zu der Rotationsachse des Rotationselementes ausgebildeter Körper sein, welcher beispielsweise eine Verlängerung einer Rotationswelle bildet und einen Durchmesser aufweist, der zumindest so groß ist wie die zentrale Öffnung selbst. Alternativ kann das Spritzschutzelement ein schirmartiges Element sein, welches sich ausgehend von der Rotationsachse nach radial außen erstreckt und die zentrale Öffnung bezogen auf eine Betrachtungsrichtung in axialer Richtung vollständig bedeckt. Vorzugsweise berührt das Spritzschutzelement den Randbereich der zentralen Öffnung nicht. Dadurch ist sichergestellt, dass das rotierende Spritzschutzelement, welches mit der Reinigungseinrichtung mitrotiert, nicht an dem Deckelelement schleift oder anschlägt. Insbesondere empfiehlt sich ein Abstand zwischen dem Deckelelement und dem Spritzschutzelement in Richtung der Längserstreckung der Rotationsachse.

Schließlich wird mit der Erfindung des Weiteren auch eine elektromotorisch betriebene Küchenmaschine mit einem Drehantrieb und einem Rührgefäß vorgeschlagen, wobei das Rührgefäß ein Rotationselement aufweist, welches drehfest mit einer Antriebswelle des Drehantriebs verbindbar ist, und wobei das Rührgefäß wie zuvor vorgeschlagen ausgebildet ist, nämlich zumindest ein erfindungsgemäßes Rührgefäß mit einer erfindungsgemäßen Reinigungseinrichtung aufweist.

Die elektromotorisch betriebene Küchenmaschine kann beispielsweise ein kombiniertes Koch-Mix-Gerät sein, welches ein Rührgefäß mit einem Rotationselement zum Antrieb eines Rührwerks, beispielsweise eines Messersatzes, aufweist, und wobei dem Rührgefäß eine Heizeinrichtung zugeordnet ist, um in dem Rührgefäß befindliche Lebensmittel zu erhitzen.

### Kurze Beschreibung der Zeichnungen

Im Folgenden wird die Erfindung anhand von Ausführungsbeispielen näher erläutert. Es zeigen:
- Fig. 1: eine erfindungsgemäße Küchenmaschine,
- Fig. 2: ein erfindungsgemäßes Rührgefäß mit einer erfindungsgemäßen Reinigungseinrichtung gemäß einer ersten Ausführungsform,
- Fig. 3: die Reinigungseinrichtung in einem Längsschnitt,
- Fig. 4: die Reinigungseinrichtung in einer perspektivischen Darstellung,
- Fig. 5: ein Rotationselement mit einer Reinigungseinrichtung gemäß einer zweiten Ausführungsform,
- Fig. 6: einen Teilbereich der Reinigungseinrichtung gemäß Figur 5 gemäß einer ersten Variante,
- Fig. 7: einen Teilbereich einer Reinigungseinrichtung gemäß einer zweiten Variante,
- Fig. 8: ein Rührgefäß mit einer Reinigungseinrichtung gemäß einer weiteren Ausführungsform mit einem Spritzschutzelement,
- Fig. 9: eine Reinigungseinrichtung und ein Spritzschutzelement gemäß einer weiteren Ausführungsform in Alleinstellung,
- Fig. 10: eine Draufsicht auf eine Reinigungseinrichtung gemäß einer weiteren Ausführungsform,
- Fig. 11: eine perspektivische Draufsicht auf die Reinigungseinrichtung gemäß Figur 10,
- Fig. 12: eine perspektivische Unteransicht der Reinigungseinrichtung gemäß den Figuren 10 und 11.

### Beschreibung der Ausführungsformen

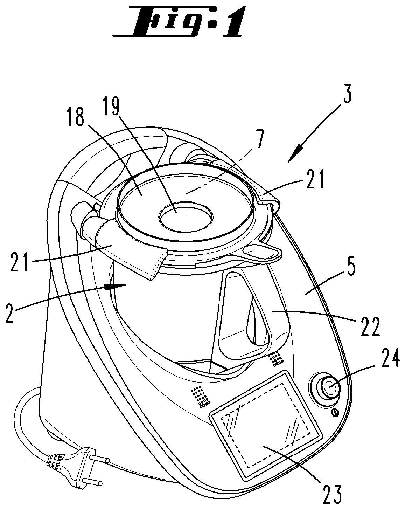

Figur 1 zeigt eine elektromotorisch betriebene Küchenmaschine 3, welche hier beispielsweise als Koch-Mix-Gerät ausgebildet ist. Die Küchenmaschine 3 weist ein Gehäuse 5 auf, welches eine Rührgefäßaufnahme für ein Rührgefäß 2 bereitstellt. Darüber hinaus verfügt das Gehäuse 5 über ein Display 23 sowie einen Schalter 24. Die Küchenmaschine 3 ist zur automatischen Zubereitung einer Speise ausgebildet, wobei der Nutzer beispielsweise mit Hilfe des als Touchscreen ausgebildeten Displays 23 sowie über den Schalter 24 Eingaben tätigen kann, die eine Auswahl und Abarbeitung von Rezepten betreffen. Die Zubereitung von Lebensmitteln kann beispielsweise das Zerkleinern, Rühren und Heizen von Speisen beinhalten.

Das in das Gehäuse 5 der Küchenmaschine 3 eingesetzte Rührgefäß 2 ist mit einem Deckelelement 18 verschlossen, welches eine zentrale Öffnung 19 aufweist, in die beispielsweise ein Messbecher eingesetzt werden kann. Das Deckelelement 18 ist hier beispielsweise mit Verriegelungselementen 21 mit dem Rührgefäß 2 verriegelt. Die Verriegelungselemente 21 sind als um eine Längsachse rotierbare Verriegelungswalzen ausgebildet, welche über einen Teilbereich des Deckelelementes 18 greifen können, um das Deckelelement 18 an dem Rührgefäß 2 zu fixieren. Das Rührgefäß 2 weist des Weiteren einen Gefäßgriff 22 auf, über welchen der Nutzer das Rührgefäß 2 in die Küchenmaschine 3 einsetzen und aus dieser entnehmen kann.

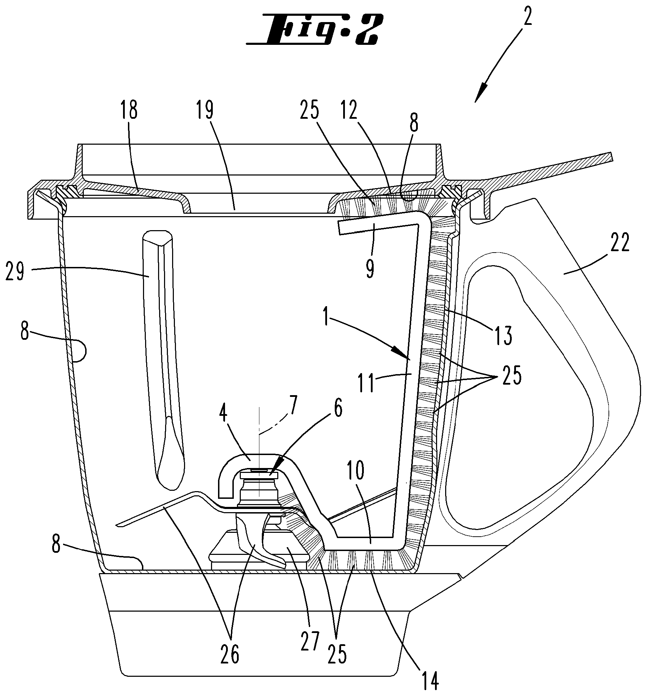

Figur 2 zeigt einen Schnitt durch das Rührgefäß 2. In dem Rührgefäß 2 ist ein Rotationselement 6 angeordnet, welches um eine Rotationsachse 7 rotierbar ist. Das Rotationselement 6 greift durch eine bodenseitige Innenwandung 8 in das Rührgefäß 2 hinein und ist mit einer Antriebswelle eines Elektromotors (nicht dargestellt) der Küchenmaschine 3 drehfest verbunden. Das Rotationselement 6 ist in einem Rotationslager 27 gelagert, welches fest mit der Innenwandung 8 des Rührgefäßes 2 verbunden ist. Das Rotationselement 6 ist hier ein Rührwerk, nämlich ein Messersatz, welcher eine Mehrzahl von Messern 26 aufweist. Bei einer Rotation des Rotationselementes 6 rotieren die Messer 26 relativ zu dem Rotationslager 27 und dem Rührgefäß 2. Zu den Innenwandungen 8 des Rührgefäßes 2 zählen im Sinne der Erfindung einerseits die bodenseitige Innenwandung 8, die Innenwandung 8 der Umfangsfläche sowie eine Innenwandung 8 des Deckelelementes 18, welches in Richtung des Aufnahmevolumens des Rührgefäßes weist. An der Umfangsfläche sind Wellenbrecher 29 ausgebildet oder angeordnet, die die Bildung einer Flüssigkeitstrombe verhindern und die Flüssigkeit auf der Höhe der Messer 26 halten sollen.

Mit dem Rotationselement 6 ist eine Reinigungseinrichtung 1 rotationsfest verbunden. Die Reinigungseinrichtung 1 ist über ein Befestigungsmittel 4 auf das Rotationselement 6 geschraubt oder gerastet. Auch andere Verbindungsvarianten sind denkbar. Die Reinigungseinrichtung 1 ist als ein in der dargestellten Ansicht C-förmiger beziehungsweise G-förmiger Körper ausgebildet, welcher zwei Schenkel 9, 10 und einen Mittelteil 11 aufweist, welcher zwischen den beiden Schenkeln 9, 10 angeordnet ist. Der Mittelteil 11 verläuft im Wesentlichen parallel zu der Rotationsachse 7. Die Schenkel 9, 10 sind zumindest bezogen auf Teilbereiche quer zu der Längserstreckung des Mittelteils 11 orientiert. Insgesamt ist die Reinigungseinrichtung 1 dabei so geformt, dass sie innerhalb des Rührgefäßes 2 formkorrespondierend an den Innenwandungen 8 des Rührgefäßes 2 anliegt, nämlich einerseits an dem Gefäßboden und der Umfangsfläche, und andererseits an der Innenseite des Deckelelementes 18. Sowohl die Schenkel 9, 10, als auch der Mittelteil 11 weisen jeweils eine Einwirkungsfläche 12,13,14 auf, welche zur Einwirkung auf die zugeordnete Innenwandung 8 dienen. Die Einwirkungsflächen 12,13,14 sind hier durch nach außen weisende Borstenelemente 25 gebildet, welche an der Innenwandung 8 anliegen. Die Reinigungseinrichtung 1 weist ein elastisches Material auf, hier beispielsweise ein Elastomer und ist als ein Formteil mit einer Rückstellkraft ausgebildet, die ausgehend von der Rotationsachse 7 in Richtung der Innenwandungen 8 wirkt, so dass die Reinigungseinrichtung 1 aufgrund ihrer Materialeigenspannung an die Innenwandung 8 gepresst wird und dort bei Rotation des Rotationselementes 6 beziehungsweise der Reinigungseinrichtung 1 an den Innenwandungen 8 entlang streicht und dort Ablagerungen lösen kann. Durch die Elastizität der Reinigungseinrichtung 1 beziehungsweise der Borstenelemente 25 kann die Reinigungseinrichtung 1 über die der Umfangsfläche angeordneten Wellenbrecher 29 rotieren, ohne Schaden zu nehmen oder Schaden zu verursachen.

Die dargestellte Reinigungseinrichtung 1 wird vorzugsweise in Verbindung mit in dem Rührgefäß 2 vorhandener Flüssigkeit, beispielsweise Wasser, angewandt. Der Flüssigkeit kann ein Reinigungszusatz zugegeben sein, welcher geeignet ist, bestimmte Ablagerungen von den Innenwandungen 8 zu lösen.

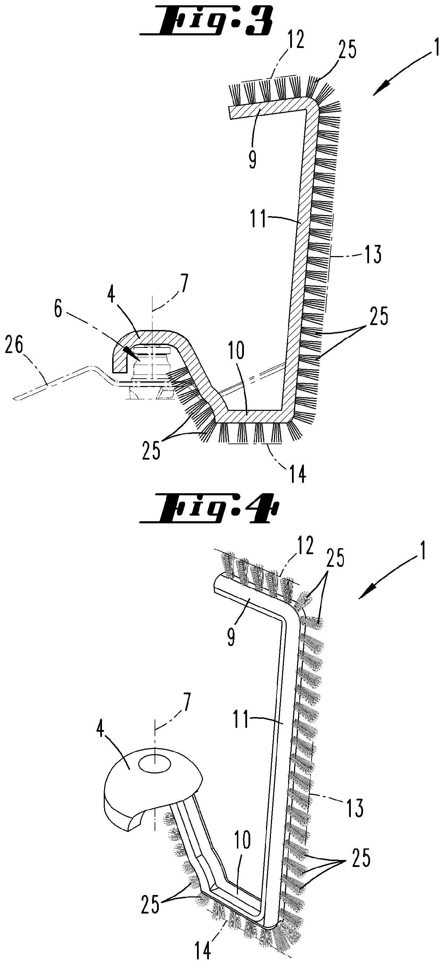

Die Figuren 3 und 4 zeigen die Reinigungseinrichtung 1 in Alleinstellung, wobei in Figur 3 zu erkennen ist, wie die Borstenelemente 25 an der Einwirkungsfläche 14 auch in Richtung der Rotationsachse 7 weisen und über das Rotationslager 27 streichen können, so dass die Reinigungseinrichtung 1 nicht nur geeignet ist, die Innenwandungen 8 des Rührgefäßes 2, inklusive des Deckelelementes 18, zu reinigen, sondern auch das Rotationslager 27.

Die Reinigungseinrichtung 1 weist im Bereich des Rotationselementes 6 das Befestigungsmittel 4 auf, welches beispielsweise über ein Innengewinde verfügt, in das ein Gewindeendbereich des Rotationselementes 6 eingeschraubt werden kann. Das Befestigungsmittel 4 überdeckt den Endbereich des Rotationselementes 6 nach der Art einer Abdeckkappe. Dies ist in Figur 4 dargestellt.

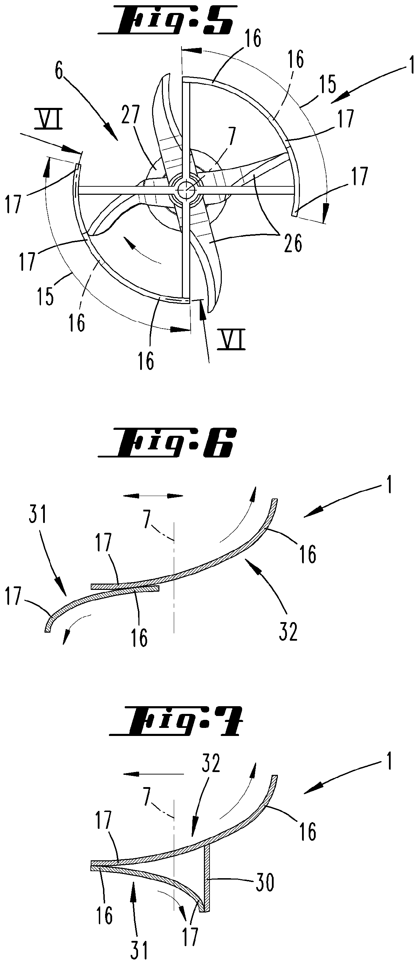

Die Figuren 5 bis 12 zeigen weitere Ausführungsformen einer erfindungsgemäßen Reinigungseinrichtung, welche eine Abreinigung der Innenwandungen 8 durch Beaufschlagung mit Spritzflüssigkeit erreichen.

Figur 5 zeigt zunächst in einer Draufsicht ein Rotationselement 6 mit drehfest verbundenen Messern 26 sowie einer drehfest daran angeordneten Reinigungseinrichtung 1. Die Reinigungseinrichtung 1 weist bezogen auf zwei Winkelabschnitte 15, welche jeweils einen Winkelbereich von etwas mehr als 90 Grad überdecken, eine aus radialer Richtung betrachtet wellenförmige Kontur auf. Zwei verschiedene Varianten solcher wellenförmigen Konturen sind in den Figuren 6 und 7 gezeigt, wobei Figur 6 die in Figur 5 gezeigte Variante betrifft.

Bezogen auf die Variante gemäß Figur 6 weist die Reinigungseinrichtung 1 in jedem der Winkelabschnitte 15 zwei Teilelemente 31, 32 auf, welche jeweils einen Wellenanstieg 16 und einen Wellenabfall 17 beinhalten. Das in Figur 6 links dargestellte Teilelement 31 ist mit dem Wellenabfall 17 nach unten gekrümmt, während das in der Figur 6 rechts dargestellte Teilelement 32 einen nach oben weisenden Wellenanstieg 16 aufweist. In einem Übergangsbereich der beiden Teilelemente 31, 32, weisen diese korrespondierend ebenfalls einen Wellenanstieg 16 und einen Wellenabfall 17 auf, welcher jeweils von dem anderen Teilelement überdeckt wird (betrachtet in Richtung der Rotationsachse 7). Bei einer Rotationsrichtung im Uhrzeigersinn kommt es bei der Variante gemäß den Figuren 6 und 7 zu einem Hochspritzen der Flüssigkeit an dem in der Figur ganz rechts angeordneten Wellenanstieg 16 des Teilelements 32, so dass die Luft in Richtung des Deckelelementes 18 und/oder des oberen Teilbereiches des Rührgefäßes 2 gefördert wird, um dort eine Ablösung von Lebensmittelresten zu bewirken. Bei Rotation in die Gegenrichtung, das heißt gegen den Uhrzeigersinn, wird die in dem Rührgefäß 2 befindliche Flüssigkeit durch den in der Figur 6 links dargestellten Wellenabfall 17 des Teilelements 31 in Richtung der bodenseitigen Innenwandung 8 des Rührgefäßes 2 gedrückt und wirkt dort auf die Innenwandung 8 sowie die Oberflächen des Rotationselementes 6, des Rotationslagers 27 und der Messer 26 ein.

Die in Figur 7 dargestellte Variante der Reinigungseinrichtung 1 ist für eine einzige Rotationsrichtung der Reinigungseinrichtung 1 optimiert. Bei dieser Ausgestaltung ist es nicht erforderlich, dass das Rotationselement 6 für eine vollumfängliche Reinigung aller Innenwandungen 8 des Rührgefäßes 2, einschließlich des Deckelelementes 18, in entgegengesetzte Richtungen rotiert wird. Vielmehr weist die Variante gemäß Figur 7 zwei in Richtung der Rotationsachse 7 übereinanderliegende Teilelemente 31, 32 auf, die jeweils einen Wellenanstieg 16 und einen Wellenabfall 17 aufweisen, wobei die Wellenanstiege 16 und die Wellenabfälle 17 im Vergleich mit Figur 6 entgegengesetzt gerichtet sind, so dass ein Wellenanstieg 16 des Teilelementes 32 in die gleiche Umfangsrichtung zeigt wie ein Wellenabfall 17 des Teilelementes 31. Bei einer Rotation dieser Reinigungseinrichtung 1 im Uhrzeigersinn kommt es gleichzeitig zu einer Aufwärtsförderung der Flüssigkeit an dem Wellenanstieg 16 des Teilelementes 32 und zu einem Herunterdrücken von Flüssigkeit an dem Wellenabfall 17 des unteren Teilelementes 31. Dadurch können zeitgleich sowohl die Bodenfläche des Rührgefäßes 2 als auch das Deckelelement 18 gereinigt werden beziehungsweise die gesamte Innenwandung 8 der Umfangsfläche. Bei Rotation der Reinigungseinrichtung 1 gegen den Uhrzeigersinn drückt das Wasser gegen ein Schubelement 30, welches im Wesentlichen parallel zu der Rotationsachse 7 orientiert ist. Dabei erfolgt keine gezielte Richtungsgebung für die Flüssigkeit.

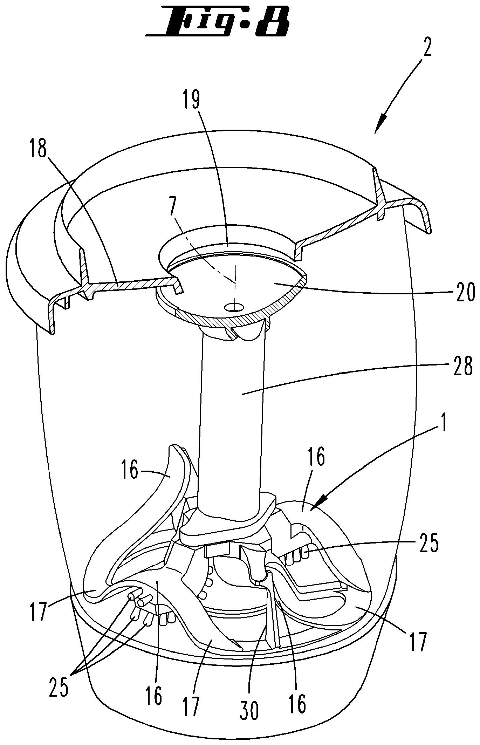

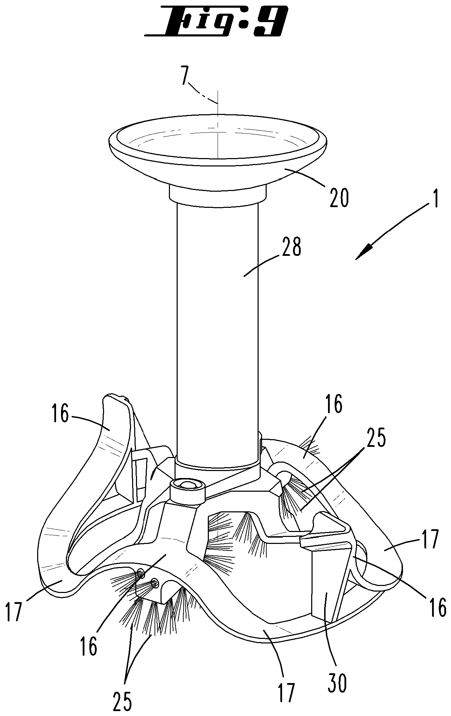

Die Figuren 8 und 9 zeigen zwei weitere Ausführungsformen einer Reinigungseinrichtung, welche einerseits eine ringförmig geschossene, wellenförmige Kontur mit Wellenanstiegen 16 und Wellenabfällen 17 aufweist, sowie unterseitig, in Richtung des Gefäßbodens gewandt, Borstenelemente 25, die über die bodenseitige Innenwandung 8 streichen. Des Weiteren ist bei dieser Ausführungsform eine Spritzschutzbasis 28 rotationsfest mit dem Rotationselement 6 beziehungsweise der Reinigungseinrichtung 1 verbunden. In Figur 8 ist die Spritzschutzbasis 28 einteilig mit der Reinigungseinrichtung 1 ausgebildet. In Figur 8 ist die Spritzschutzbasis 28 auf die Reinigungseinrichtung 1 geschraubt. Die Spritzschutzbasis 28 weist endseitig im Bereich einer zentralen Öffnung 19 des Deckelelementes 18 ein schirmartiges Spritzschutzelement 20 auf, welches die zentrale Öffnung 19 in axialer Richtung betrachtet abschirmt. Die von den Wellenanstiegen 16 der Reinigungseinrichtung 1 hoch beförderte Flüssigkeit wird dabei von dem Spritzschutzelement 20 daran gehindert, die zentrale Öffnung 19 des Deckelelementes 18 zu verlassen. Die Reinigungseinrichtung 1 weist in axialer Richtung betrachtet eine geschlossene Ringform auf, an welcher jeweils zwei Wellenanstiege 16 zu einem Wellenberg und zwei Wellenabfälle 17 zu einem Wellental geformt sind. Durch diese Ausbildung ist es möglich, die Reinigungseinrichtung 1 für eine Reinigung der Innenwandungen 8 in eine beliebige Richtung zu rotieren, da die Reinigungseinrichtung 1 sowohl für eine Rotationsrichtung im Uhrzeigersinn, als auch für eine Rotationsrichtung gegen den Uhrzeigersinn Wellenanstiege 16 und Wellenabfälle 17 aufweist, welche die Flüssigkeit einerseits nach oben und andererseits nach unten drücken können.

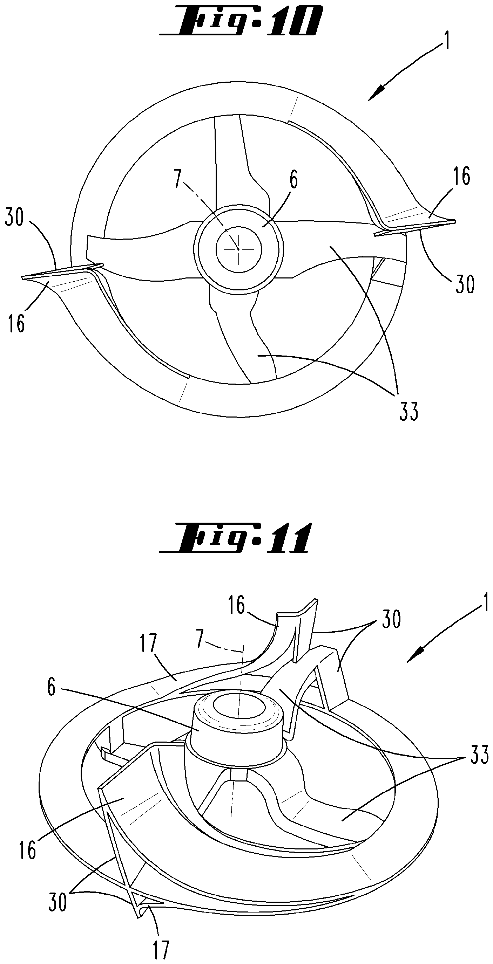

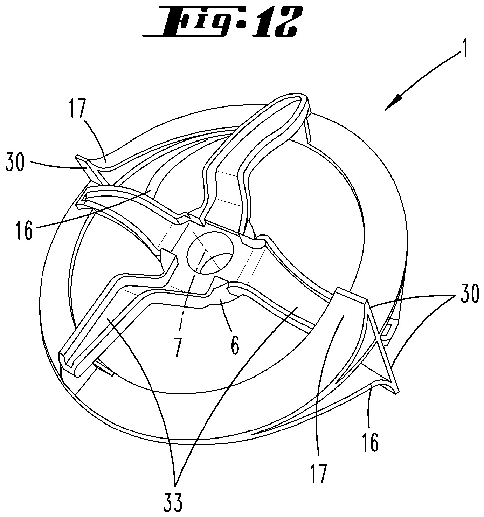

Die in den Figuren 10 bis 12 dargestellte Ausführungsform einer erfindungsgemäßen Reinigungseinrichtung 1 ist in unterschiedlichen Ansichten dargestellt, nämlich in den Figuren 10 und 11 von oben und in Figur 12 von unten. Diese Reinigungseinrichtung 1 weist Streben auf, welche formkorrespondierend zu Messern eines Messersatzes ausgebildet sind (siehe Figur 12) und auf diese aufgeklipst werden können. Die Figuren zeigen eine geschlossene ringförmige Kontur, an welcher Wellenanstiege 16 und Wellenabfälle 17 angeordnet sind, die sich bezogen auf die Rotationsachse 7 jeweils paarweise gegenüberliegen. Die Wellenanstiege 16 und die Wellenabfälle 17 weisen in gleiche Umfangsrichtung, nämlich gemäß Figur 11 gegen den Uhrzeigersinn, so dass bei einer Rotation der Reinigungseinrichtung 1 gegen den Uhrzeigersinn Flüssigkeit sowohl nach oben als auch nach unten gegen die Innenwandungen 8 gefördert wird. Auf der in Umfangsrichtung den Wellenanstiegen 16 und Wellenabfällen 17 gegenüberliegenden Seite weist die Reinigungseinrichtung 1 jeweils ein Schubelement 30 auf, welches die Rückseite des Wellenanstiegs 16 beziehungsweise Wellenabfalls 17 verschließt, so dass Flüssigkeit nicht in den spaltförmigen Bereich eindringen kann, sondern bei Rotation der Reinigungseinrichtung 1 im Uhrzeigersinn in verschiedene Richtungen verteilt wird.

Figur 12 zeigt schließlich eine Unterseite der Reinigungseinrichtung 1, mit den Streben 33 zur formkorrespondierenden Verbindung mit Messern eines Messersatzes. Dadurch kann eine rotationsfeste Verbindung zwischen der Reinigungseinrichtung 1 und dem Messersatz sichergestellt werden.

**Liste der Bezugszeichen**

| | | | |
|---|---|---|---|
| 1 | Reinigungseinrichtung | 25 | Borstenelement |
| 2 | Rührgefäß | 26 | Messer |
| 3 | Küchenmaschine | 27 | Rotationslager |
| 4 | Befestigungsmittel | 28 | Spritzschutzbasis |
| 5 | | 29 | Wellenbrecher |
| 6 | Rotationselement | 30 | Schubelement |
| 7 | Rotationsachse | 31 | Teilelement |
| 8 | Innenwandung | 32 | Teilelement |
| 9 | Schenkel | 33 | Strebe |
| 10 | Schenkel | | |
| 11 | Mittelteil | | |
| 12 | Einwirkungsfläche | | |
| 13 | Einwirkungsfläche | | |
| 14 | Einwirkungsfläche | | |
| 15 | Winkelabschnitt | | |
| 16 | Wellenanstieg | | |
| 17 | Wellenabfall | | |
| 18 | Deckelelement | | |
| 19 | Öffnung | | |
| 20 | Spritzschutzelement | | |
| 21 | Verriegelungselement | | |
| 22 | Gefäßgriff | | |
| 23 | Display | | |
| 24 | Schalter | | |

## Patentansprüche

1. Reinigungseinrichtung (1) für ein Rührgefäß (2) einer elektromotorisch betriebenen Küchenmaschine (3), welches Rührgefäß (2) einen Gefäßboden, eine Umfangswandung und ein Deckelelement (18) aufweist, wobei die Reinigungseinrichtung (1) mittels eines Befestigungsmittels (4) drehfest mit einem in dem Rührgefäß (2) der Küchenmaschine (3) positionierten Rotationselement (6) verbindbar ist und ausgebildet ist, bei Rotation des Rotationselements (6) um eine Rotationsachse (7) über zumindest einen Teilbereich einer Innenwandung (8) des Rührgefäßes (2) zu streichen und dort befindliche Ablagerungen mechanisch zu lösen, wobei die Reinigungseinrichtung (1) zur Reinigungseinwirkung sowohl in axialer Richtung, als auch in radialer Richtung ausgebildet ist, wobei die Reinigungseinrichtung (1) in radialer Richtung betrachtet eine C-förmige Gestalt aufweist, welche ausgehend von der Rotationsachse (7) konvex nach außen geformt ist und zumindest zwei sich gegenüberstehende Schenkel (9,10) und einen die beiden Schenkel (9,10) miteinander verbindenden Mittelteil (11) aufweist, **dadurch gekennzeichnet, dass** die Reinigungseinrichtung (1) eingerichtet ist, den Gefäßboden, die Umfangswandung und das Deckelelement (18) zu kontaktieren, so dass bei mit dem Deckelelement (18) verschlossenem Rührgefäß (2) gleichzeitig eine Reinigung von Gefäßboden, Umfangswandung und Deckelelement (18) stattfinden kann.

2. Reinigungseinrichtung (1) nach Anspruch 1, **dadurch gekennzeichnet, dass** die Reinigungseinrichtung (1) zumindest zwei nicht parallel zueinander ausgerichtete, im Wesentlichen rechtwinklig zueinander orientierte, Einwirkungsflächen (12,13,14) aufweist.

3. Reinigungseinrichtung (1) nach Anspruch 1 oder 2, **dadurch gekennzeichnet, dass** die Reinigungseinrichtung (1) zumindest in Teilbereichen aus einem elastischen Material gebildet ist, so dass die C-Form durch Krafteinwirkung von radial außen in Richtung der Rotationsachse (7) stauchbar ist und/oder bei Fliehkrafteinwirkung nach radial außen streckbar ist.

4. Reinigungseinrichtung (1) für ein Rührgefäß (2) einer elektromotorisch betriebenen Küchenmaschine (3), wobei die Reinigungseinrichtung (1) mittels eines Befestigungsmittels (4) drehfest mit einem in dem Rührgefäß (2) der Küchenmaschine (3) positionierten Rotationselement (6) verbindbar ist und ausgebildet ist, bei Rotation des Rotationselements (6) um eine Rotationsachse (7) an zumindest einem Teilbereich einer Innenwandung (8) des Rührgefäßes (2) befindliche Ablagerungen zu lösen, insbesondere Reinigungseinrichtung (1) nach einem der vorhergehenden Ansprüche, wobei die Reinigungseinrichtung (1) zur Reinigungseinwirkung sowohl in axialer Richtung, als auch in radialer Richtung ausgebildet ist, wobei die Reinigungseinrichtung (1) die Rotationsachse (7) in Umfangsrichtung zumindest bezogen auf einen Winkelabschnitt (15) umgibt und von radial außen betrachtet eine wellenförmige Kontur mit zumindest einem Wellenanstieg (16) und zumindest einem Wellenabfall (17) aufweist, **dadurch gekennzeichnet, dass** die Reinigungseinrichtung (1) in axiale Richtung betrachtet eine geschlossene, ringförmige Kontur aufweist.

5. Reinigungseinrichtung (1) nach Anspruch 4, **dadurch gekennzeichnet, dass** die wellenförmige Kontur mehrere Wellenanstiege (16) und mehrere Wellenabfälle (17) aufweist, wobei vorzugsweise sich die Wellenanstiege (16) bezogen auf die Rotationsachse (7) paarweise gegenüberliegen und/oder sich die Wellenabfälle (17) bezogen auf die Rotationsachse (7) paarweise gegenüberliegen.

6. Reinigungseinrichtung (1) nach Anspruch 4 oder 5, **dadurch gekennzeichnet, dass** ein Wellenanstieg (16) und ein Wellenabfall (17) in einer zu der Rotationsachse (7) parallelen Richtung gespiegelt hintereinander liegen.

7. Reinigungseinrichtung (1) nach einem der vorhergehenden Ansprüche, **dadurch gekennzeichnet, dass** die Reinigungseinrichtung (1) ein Borstenelement (25) und/oder ein Abstreifelement aufweist.

8. Rührgefäß (2) für eine elektromotorisch betriebene Küchenmaschine (3), wobei das Rührgefäß (2) ein Rotationselement (6) aufweist, das mit einer Antriebswelle eines Drehantriebs der Küchenmaschine (3) drehfest verbindbar ist, wobei das Rührgefäß (2) eine Reinigungseinrichtung (1) zur Reinigung einer Innenwandung (8) des Rührgefäßes (2) aufweist, **dadurch gekennzeichnet, dass** die Reinigungseinrichtung (1) nach einem der vorhergehenden Ansprüche ausgebildet ist.

9. Rührgefäß (2) nach Anspruch 8, **dadurch gekennzeichnet, dass** das Rührgefäß (2) ein Deckelelement (18) mit einer zentralen Öffnung (19) aufweist, wobei die Reinigungseinrichtung (1) bezogen auf eine Betrachtung in axialer Richtung ein die zentrale Öffnung (19) bedeckendes Spritzschutzelement (20) aufweist, welches ausgebildet ist, ein Herausspritzen von Flüssigkeit aus der zentralen Öffnung (19) zu verhindern.

10. Elektromotorisch betriebene Küchenmaschine (3) mit einem Drehantrieb und einem Rührgefäß (2), wobei das Rührgefäß (2) ein Rotationselement (6) aufweist, welches drehfest mit einer Antriebswelle des Drehantriebs verbindbar ist, **dadurch gekennzeichnet, dass** das Rührgefäß (2) nach Anspruch 8 oder 9 ausgebildet ist.

## Claims

1. Cleaning device (1) for a stirring vessel (2) of a kitchen appliance (3) operated by an electric motor, which stirring vessel (2) has a vessel bottom, a circumferential wall and a cover element (18), the cleaning device (1) being connected for conjoint rotation to a rotating element (6) positioned in the stirring vessel (2) of the kitchen appliance (3) by means of a fastening means (4) and being designed to sweep over at least a portion of an inner wall (8) of the stirring vessel (2) when the rotating element (6) rotates about an axis of rotation (7), and to mechanically remove deposits located thereon, the cleaning device (1) being designed to perform a cleaning action both in the axial direction and in the radial direction, the cleaning device (1), when viewed in the radial direction, having a C-shaped design which, starting from the axis of rotation (7), is outwardly convex and has at least two opposing legs (9, 10) and a middle part (11) connecting the two legs (9, 10) to one another, **characterised in that** the cleaning device (1) is configured to contact the vessel bottom, the circumferential wall and the cover element (18), so that when the stirring vessel (2) is closed by the cover element (18), the vessel bottom, circumferential wall and cover element (18) can be cleaned at the same time.

2. Cleaning device (1) according to claim 1, **characterised in that** the cleaning device (1) has at least two action surfaces (12, 13, 14) which are not aligned parallel to one another and are substantially oriented at right angles to one another.

3. Cleaning device (1) according to either claim 1 or claim 2, **characterised in that** the cleaning device (1) is formed at least in portions from a resilient material, so that the C shape can be compressed by a force acting from radially outside towards the axis of rotation (7) and/or can be stretched radially outwardly when acted on by a centrifugal force.

4. Cleaning device (1) for a stirring vessel (2) of a kitchen appliance (3) operated by an electric motor, the cleaning device (1) being connected for conjoint rotation to a rotating element (6) positioned in the stirring vessel (2) of the kitchen appliance (3) by means of a fastening means (4) and being designed to mechanically remove deposits on at least a portion of an inner wall (8) of the stirring vessel (2) when the rotating element (6) rotates about an axis of rotation (7), in particular the cleaning device (1) according to any of the preceding claims, the cleaning device (1) being designed to perform a cleaning action both in the axial direction and in the radial direction, the cleaning device (1) surrounding the axis of rotation (7) in the circumferential direction at least relative to an angular portion (15) and, viewed from radially outside, having a wave-shaped contour comprising at least one wave rising portion (16) and at least one wave falling portion (17), **characterised in that** the cleaning device (1), viewed in the axial direction, has a closed, annular contour.

5. Cleaning device (1) according to claim 4, **characterised in that** the wave-shaped contour has a plurality of wave rising portions (16) and a plurality of wave falling portions (17), the wave rising portions (16) preferably being opposite one another in pairs relative to the axis of rotation (7) and/or the wave falling portions (17) being opposite one another in pairs relative to the axis of rotation (7).

6. Cleaning device (1) according to either claim 4 or claim 5, **characterised in that** a wave rising portion (16) and a wave falling portion (17) are arranged one behind the other so as to be mirrored in a direction parallel to the axis of rotation (7).

7. Cleaning device (1) according to any of the preceding claims, **characterised in that** the cleaning device (1) has a bristle element (25) and/or a scraper element.

8. Stirring vessel (2) for a kitchen appliance (3) operated by an electric motor, the stirring vessel (2) having a rotating element (6) which can be connected for conjoint rotation to a drive shaft of a rotary drive of the kitchen appliance (3), the stirring vessel (2) having a cleaning device (1) for cleaning an inner wall (8) of the stirring vessel (2), **characterised in that** the cleaning device (1) is designed according to any of the preceding claims.

9. Stirring vessel (2) according to claim 8, **characterised in that** the stirring vessel (2) has a cover element (18) having a central opening (19), the cleaning device (1), relative to a viewing direction in the axial direction, having a splash guard element (20) which covers a central opening (19) and which is designed to prevent liquid from splashing out of the central opening (19).

10. Kitchen appliance (3) operated by an electric motor, which appliance has a rotary drive and a stirring vessel (2), the stirring vessel (2) having a rotating element (6) which can be connected for conjoint rotation to a drive shaft of the rotary drive, **characterised in that** the stirring vessel (2) is designed according to either claim 8 or claim 9.

## Revendications

1. Dispositif de nettoyage (1) pour un récipient d'agitation (2) d'un robot de cuisine (3) à moteur électrique, lequel récipient d'agitation (2) présente un fond de récipient, une paroi périphérique et un élément de couvercle (18), dans lequel le dispositif de nettoyage (1) peut être relié de manière solidaire en rotation à un élément rotatif (6) positionné dans le récipient d'agitation (2) du robot de cuisine (3) au moyen d'un moyen de fixation (4) et est conçu pour, lors de la rotation de l'élément rotatif (6) autour d'un axe de rotation (7), passer sur au moins une zone partielle d'une paroi intérieure (8) du récipient d'agitation (2) et détacher mécaniquement des dépôts qui s'y trouvent, dans lequel le dispositif de nettoyage (1) est formé pour agir en nettoyage aussi bien dans la direction axiale que dans la direction radiale, le dispositif de nettoyage (1) présentant, vu dans la direction radiale, une forme en C qui, partant de l'axe de rotation (7), est de forme convexe vers l'extérieur et présente au moins deux branches (9, 10) opposées et une partie centrale (11) reliant les deux branches (9, 10) entre elles, **caractérisé en ce que** le dispositif de nettoyage (1) est conçu pour entrer en contact avec le fond du récipient, la paroi périphérique et l'élément de couvercle (18) de manière que, lorsque le récipient d'agitation (2) est fermé par l'élément de couvercle (18), un nettoyage du fond du récipient, de la paroi périphérique et de l'élément de couvercle (18) peut avoir lieu simultanément.

2. Dispositif de nettoyage (1) selon la revendication 1, **caractérisé en ce que** le dispositif de nettoyage (1) présente au moins deux surfaces d'action (12, 13, 14) non parallèles entre elles qui sont orientées sensiblement à angle droit l'une par rapport à l'autre.

3. Dispositif de nettoyage (1) selon la revendication 1 ou 2, **caractérisé en ce que** le dispositif de nettoyage (1) est formé, au moins dans des zones partielles, d'un matériau élastique de manière que la forme en C soit compressible par l'application d'une force depuis radialement à l'extérieur en direction de l'axe de rotation (7) et/ou soit extensible radialement vers l'extérieur en cas d'application d'une force centrifuge.

4. Dispositif de nettoyage (1) pour un récipient d'agitation (2) d'un robot ménager (3) à moteur électrique, dans lequel le dispositif de nettoyage (1) peut être relié de manière solidaire en rotation à un élément rotatif (6) positionné dans le récipient d'agitation (2) du robot de cuisine (3) au moyen d'un moyen de fixation (4) et est conçu pour, lors de la rotation de l'élément rotatif (6) autour d'un axe de rotation (7), détacher des dépôts se trouvant sur au moins une zone partielle d'une paroi intérieure (8) du récipient d'agitation (2), en particulier dispositif de nettoyage (1) selon l'une des revendications précédentes, le dispositif de nettoyage (1) étant conçu pour agir en nettoyage aussi bien dans la direction axiale que dans la direction radiale, le dispositif de nettoyage (1) entourant l'axe de rotation (7) dans la direction périphérique au moins par rapport à un secteur angulaire (15) et présentant, vu de l'extérieur dans la direction radiale, un contour ondulé avec au moins une montée d'onde (16) et au moins une descente d'onde (17), **caractérisé en ce que** le dispositif de nettoyage (1) présente, vu dans la direction axiale, un contour fermé de forme annulaire.

5. Dispositif de nettoyage (1) selon la revendication 4, **caractérisé en ce que** le contour ondulé présente plusieurs montées d'ondes (16) et plusieurs descentes d'ondes (17), dans lequel, de préférence, les montées d'ondes (16) sont opposées par paires par rapport à l'axe de rotation (7) et/ou les descentes d'ondes (17) sont opposées par paires par rapport à l'axe de rotation (7).

6. Dispositif de nettoyage (1) selon la revendication 4 ou 5, **caractérisé en ce qu'**une montée d'onde (16) et une descente d'onde (17) se trouvent l'une derrière l'autre en miroir dans une direction parallèle à l'axe de rotation (7).

7. Dispositif de nettoyage (1) selon l'une des revendications précédentes, **caractérisé en ce que** le dispositif de nettoyage (1) comporte un élément à poils (25) et/ou un élément de raclage.

8. Récipient d'agitation (2) pour un robot de cuisine (3) à moteur électrique, le récipient d'agitation (2) présentant un élément rotatif (6) qui peut être relié de manière solidaire en rotation à un arbre d'entraînement d'un entraînement rotatif du robot de cuisine (3), le récipient d'agitation (2) présentant un dispositif de nettoyage (1) pour le nettoyage d'une paroi intérieure (8) du récipient d'agitation (2), **caractérisé en ce que** le dispositif de nettoyage (1) est conçu selon l'une des revendications précédentes.

9. Récipient d'agitation (2) selon la revendication 8, **caractérisé en ce que** le récipient d'agitation (2) présente un élément de couvercle (18) avec une ouverture centrale (19), le dispositif de nettoyage (1) présentant, par rapport à une observation dans la direction axiale, un élément de protection contre les éclaboussures (20) recouvrant l'ouverture centrale (19), qui est conçu pour empêcher une projection de liquide hors de l'ouverture centrale (19).

10. Robot de cuisine (3) à moteur électrique avec un entraînement rotatif et un récipient d'agitation (2), le récipient d'agitation (2) présentant un élément rotatif (6) qui peut être relié de manière solidaire en rotation à un arbre d'entrainement de l'entrainement rotatif, **caractérisé en ce que** le récipient d'agitation (2) est réalisé selon la revendication 8 ou 9.
